# EUROPEAN PATENT APPLICATION

(11) **EP 0 817 015 A2**
(43) Date of publication of application: **07.01.1998**
(21) Application number: 97110673.7
(22) Date of filing: 30.06.1997
(51) Int. Cl.: G06F 9/46

(54) **Monitor system for synchronization of threads within a single process**

(30) Priority: 03.07.1996 US 675346
(71) Applicant: SIEMENS AKTIENGESELLSCHAFT, 80333 München (DE)
(72) Inventor: Dorn, Karlheinz, Dipl.-Inf., 90562 Kalchreuth (DE)

(57) **Abstract**

A monitor system for controlling and synchronizing execution of threads within a single process. A basic monitor class and an application monitor class which inherits therefrom are defined such that gate locks are used to control execution of threads, and application monitors have condition queues for stacking threads waiting for conditions to become true. A memory for first-in, first-out (FIFO) storage of delayed threads also is present.

## Description

### BACKGROUND OF THE INVENTION

The present invention is generally directed to object oriented computer systems and processes. More specifically, the invention is directed to operating system structures for multi programming environments.

As set forth in U.S. Patent No. 5,499,365. fully incorporated herein by reference, object oriented programming systems and processes, also referred to as "object oriented computing environments," have been the subject of much investigation and interest. As is well known to those having skill in the art, object oriented programming systems are composed of a large number of "objects." An object is a data structure, also referred to as a "frame," and a set of operations or functions, also referred to as "methods," that can access that data structure. The frame may have "slots," each of which contains an "attribute" of the data in the slot. The attribute may be a primitive (such as an integer or string) or an object reference which is a pointer to another object. Objects having identical data structures and common behavior can be grouped together into, and collectively identified as a "class."

Each defined class of objects will usually be manifested in a number of "instances". Each instance contains the particular data structure for a particular example of the object. In an object oriented computing environment, the data is processed by requesting an object to perform one of its methods by sending the object a "message". The receiving object responds to the message by choosing the method that implements the message name, executing this method on the named instance, and returning control to the calling high level routine along with the results of the method. The relationships between classes, objects and instances are established during "build time" or generation of the object oriented computing environment, i.e., prior to "run time" or execution of the object oriented computing environment.

In addition to the relationships between classes, objects and instances identified above, inheritance relationships also exist between two or more classes such that a first class may be considered a "parent' of a second class and the second class may be considered a "child" of the first class. In other words, the first class is an ancestor of the second class and the second class is a descendant of the first class, such that the second class (i.e., the descendant) is said to inherit from the first class (i.e., the ancestor). The data structure of the child class includes all of the attributes of the parent class.

Object oriented systems have heretofore recognized "versions" of objects. A version of an object is the same data as the object at a different point in time. For example, an object which relates to a "work in progress", is a separate version of the same object data which relates to a completed and approved work. Many applications also require historical records of data as it existed at various points in time. Thus, different versions of an object are required.

Two articles providing further general background are E.W. Dijkstra, The Structure of "THE" Multi programming System, Communications of the ACM, Vol. 11, No. 5, May 1968, pp. 341-346, and C.A.R. Hoare, Monitors: Operating Systems Structuring Concepts, Communications of the ACM, Vol. 17, No. 10, October, 1974, pp. 549-557, both of which are incorporated herein by reference. The earlier article describes methods for synchronizing using primitives and explains the use of semaphores while the latter article develops Brinch-Hansen's concept of a monitor as a method of structuring an operating system. In particular, the Hoare article introduces a form of synchronization for processes and describes a possible method of implementation in terms of semaphores and gives a proof rule as well as illustrative examples.

As set forth in the Hoare article, a primary aim of an operating system is to share a computer installation among many programs making unpredictable demands upon its resources. A primary task of the designer is, therefore, to design a resource allocation with scheduling algorithms for resources of various kinds (for example, main store, drum store, magnetic tape handlers, consoles). In order to simplify this task, the programmer tries to construct separate schedulers for each class of resources. Each scheduler then consists of a certain amount of local administrative data, together with some procedures and functions which are called by programs wishing to acquire and release resources. Such a collection of associated data and procedures is known as a monitor.

The following abbreviations may be utilized in this application:
- Thread - a parallel execution unit within a process. A monitor synchronizes, by forced sequentialization, the parallel access of several simultaneously running threads, which all call up functions of one object that are protected through a monitor. Synchronization-Primitive - a means of the operating system for reciprocal justification of parallel activities.
- Semaphore - a Synchronization-Primitive for parallel activities.
- Mutex - a special Synchronization-Primitive for parallel activities, for mutual exclusion purposes. It includes a critical code range.
- Condition Queue - an event waiting queue for parallel activities referring to a certain condition.
- Gate Lock - a mutex of the monitor for each entry-function, for protection of an object, for allowing only one parallel activity at a time to use an Entry-Routine of the object.
- Long Term Scheduling - longtime delay of one parallel activity within a condition queue or event waiting queue for parallel activities.
- Broker - a distributor.

With the introduction of multi-threading in traditional operating systems processes, there is a need for synchronizing these new parallel running threads within a single process.

The traditional approach to accommodate multi-threading has been based upon using primitives of the threading package offered by the underlying operating system (for example, semaphores, madhouses or condition variables). However, this is an approach which is difficult to use for each programmer, and is error prone because it is a very low-level and mostly non-portable, and in some cases, depending on the operating system, it is not reliable.

### SUMMARY OF THE INVENTION

The present invention provides a means and method for synchronizing threads within a single process. To that end, the invention provides for application of a monitor concept within a process.

In an embodiment, the invention provides an object oriented computing system for executing threads on a computer platform, comprising:
a basic monitor class for short term scheduling of thread execution;
a gate lock which controls entry of threads into a monitor of the basic monitor class so as to limit entry into the monitor to one thread at a time;
an application monitor class for long term scheduling of thread execution, which application monitor class inherits from the basic monitor class, an application monitor of the application monitor class having a condition queue for queuing of threads waiting for conditions to become true while other threads may enter the application monitor; and
a memory accessed by the application monitor for storage of threads whose execution has been delayed.

In an embodiment, the invention provides that the basic monitor class has a private method that implicitly acquires the gate lock and a private method that implicitly releases the gate lock.

In an embodiment, the invention provides that the basic monitor class has public methods, and every public method must call routines that acquire and release the gate lock when entering and leaving a monitor of the basic monitor class, respectively.

In an embodiment, the invention provides that the application monitor class has private methods for threads to call to delay themselves on an internal synchronizing primitive and threads to block and unblock other threads under execution in a monitor of the basic monitor class.

These and other features of the invention are discussed in greater detail below in the following detailed description of the presently preferred embodiments with reference to the accompanying drawings.

### BRIEF DESCRIPTION OF THE DRAWINGS

- Figure 1: illustrates a hardware and software environment.
- Figure 2: illustrates the main components of an object-oriented program from Figure 5 of U.S. Patent No. 5,313,629.
- Figure 3: illustrates an example of an inheritance hierarchy to an object oriented platform.
- Figure 4: is a block diagram illustrating one possible application of the invention wherein two different classes of objects are utilized in a computer system in accordance with principles of the invention.

### DETAILED DESCRIPTION OF THE PRESENTLY PREFERRED EMBODIMENTS

Again referring to U.S. Patent No. 5,499,365, in an object oriented computing environment, work is accomplished by sending action request messages to an object which contains data. The object will perform a requested action on the data according to its predefined methods. Objects may be grouped into object classes which define the types and meanings of the data, and the action requests (messages) that the object will honor. The individual objects containing data are called instances of the class.

Object classes can be defined to be subclasses of other classes. Subclasses inherit all of the data characteristics and methods of the parent class. They can add additional data and methods and they can override or redefine any data elements or methods of the parent class. An object may be represented schematically, and generally is represented herein by a rectangle. The upper rectangle contains the data structure represented by a frame having slots, each of which contains an attribute of the data in the slot. The lower rectangle indicates the object's methods which encapsulate the frame and which are used to perform actions on the data encapsulated in the frame of the upper rectangle.

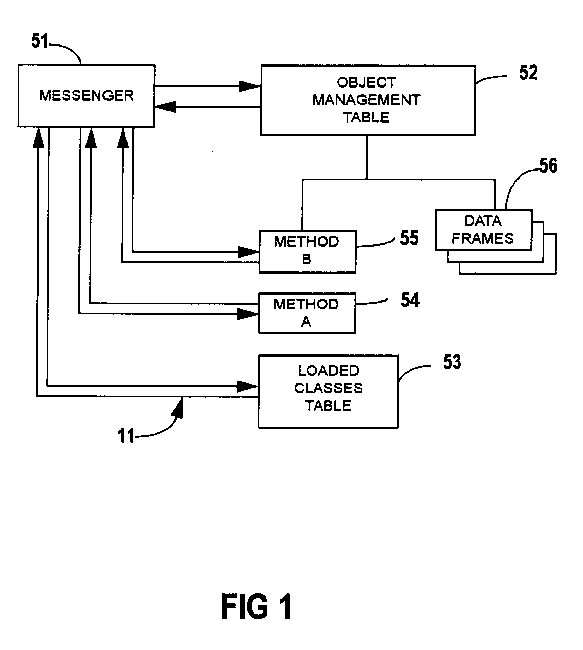

Figures 1, 2 and 3 are reproduced herein from U.S. Patent No. 5,499,365. The following description relating thereto is derived from that patent.

Referring now to Figure 1, a hardware and software environment in which the present invention operates will now be described. As shown in Figure 1, the present invention is a method and system within an object oriented computing environment 11 operating on one or more computer platforms 12. It will be understood by those having skill in the art that computer platform 12 typically includes computer hardware units 13 such as a central processing unit (CPU) 14, a main memory 15 and an input/output (I/O) interface 16, and may include peripheral components such as a display terminal 21, an input device 22 such as a keyboard or a mouse, nonvolatile data storage devices 23 such as magnetic or optical disks, printers 24 and other peripheral devices. Computer platform 12 also typically includes microinstruction codes 26 and an operating system 28.

As shown in Figure 1, object oriented computing environment 11 operates on computer platform 12. It will be understood by those having skill in the art that object oriented computing environment may operate across multiple computer platforms. Object oriented computing environment 11 is preferably written in the C++ computer programming language. The design and operation of computer platforms and object oriented computing environments including that of an object manager, are well known to those having skill in the art and are described, for example, in U.S. Patent No. 5,265,206 issued November 23, 1993 to Abraham, et al., entitled "A Messenger and Object Manager to Implement an Object Oriented Environment"; and U.S. Patent No. 5,161,225 to Abraham, et al., entitled "Persistent Stream for Processing Time Consuming and Reusable Queries in an Object Oriented Database Management System; U.S. Patent No. 5,151,987 to Abraham, et al., entitled "Recovery Objects in an Object Oriented Computing Environment"; and U.S. Patent No. 5,161,223 to Abraham, entitled "Resumeable Batch Query for Processing Time Consuming Queries in an Object Oriented Database Management System", the disclosures of which are hereby incorporated herein by reference, and in numerous textbooks such as Object Oriented Software Construction by Bertrand Meyer, published by Prentice Hall in 1988, the disclosure of which is incorporated herein by reference and the publication referred to above in the Background section.

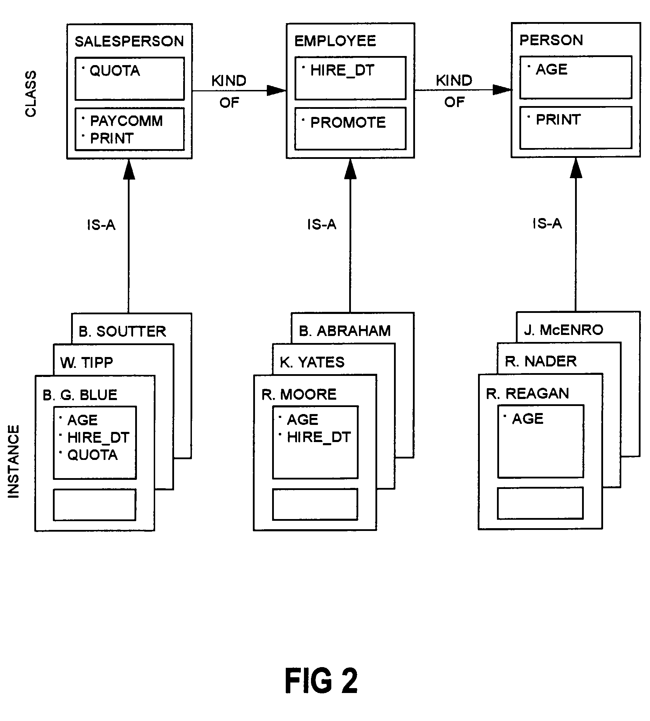

Referring now to Figure 2, which is a reproduction of Figure 5 of U.S. Patent No. 5,313,629, the main components of an object oriented program (11, Figure 1) will be described. A detailed description of the design and operation of an object oriented program is provided in "Object Oriented Software Construction", by Bertrand Meyer, published by Prentice Hall in 1988, the disclosure of which is incorporated herein by reference.

Referring to Figure 2, a typical object oriented computing environment 11 includes three primary components: a Messenger 51, and Object Management Table 52 and a Loaded Classes Table 53. The Messenger 51 controls communication between calling and called messages, Object Management Table 52 and Loaded Classes Table 53. Object Management Table 52 contains a list of pointers to all active object instances. The Loaded Classes Table 53 contains a list of pointers to all methods of active object classes.

Operation of the Object Oriented Program 11 will now be described for the example illustrated in Figure 2, in which Methods A (block 54) of an object sends a message to method B (block 55) of an object. Method A sends a message to Method B by calling Messenger 51. The message contains (1) an object reference of the instance to receive the message, (2) the method the object instance is requested to perform on the data it encapsulates, and (3) any parameters needed by the receiving method. Messenger 51 obtains a pointer to the data frame 56 of the instance object specified by Method A, by searching Object Management Table 52 for the instance object. If the specified instance object cannot be found, Object Management Table 52 adds the instance object to the table and calls the instance to materialize its data from the database. Once in the instance table, Object Management Table 52 returns the pointer to the materialized instance object.

Messenger 51 then obtains the address of Method B from the Loaded Classes Table 53. If the instance's class is not loaded, the Loaded Classes Table 53 will load it at this time to materialize its data. The Loaded Classes Table 53 searches for the specified method (Method B) and returns the address of the method to Messenger 51.

The Messenger 51 then calls Method B, passing it a system data area and the parameters from the call made by Method A including the pointer. Method B accesses the data frame 56 using the pointer. Method B then returns control to the Messenger 51 which returns control to Method A.

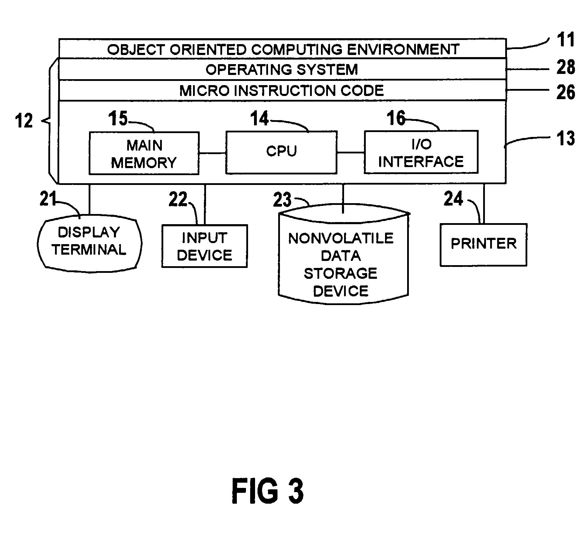

Figure 3 illustrates an example of an inheritance hierarchy to an object oriented computing platform. As shown, three object classes are illustrated for "salesperson", "employee" and "person", where a salesperson is a "kind of" employee, which is a "kind of" person. In other words, salesperson is a subclass of employee and employee is the superclass of salesperson. Similarly, employee is the subclass of person and person is the superclass of employee. Each class shown includes three instances. B. Soutter, W. Tipp and B.G. Blue are salespersons. B. Abraham, K. Yates and R. Moore are employees. J. McEnroe, R. Nader and R. Reagan are persons. In other words, an instance is related to its class by an "is a" relation.

Each subclass "inherits" the frames and methods of its superclass. Thus, for example, a salesperson frame inherits age and hire date objects from the employee's superclass as well as promote methods from the employee superclass. Salesperson also includes a unique quota attribute and a pay commission method. Each instance can access all methods and frames of its superclass, so that, for example, B.G Blue can be promoted.

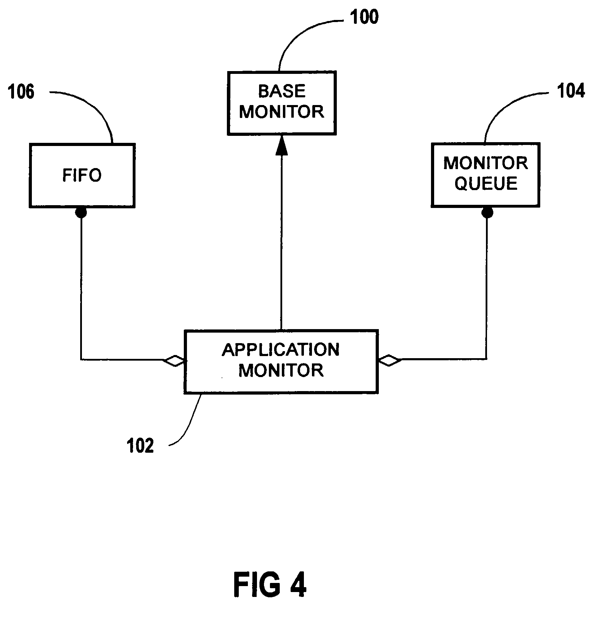

Referring now to Figure 4, in accordance with the invention, an application monitor 102 can be constructed which inherits from a basic monitor class 100 and which contains an arbitrary number of condition queues. Thus, basically, two class definitions allow for construction of any monitor system for controlling thread execution.

The basic monitor class 100 (which is used for short-term thread scheduling) is defined such that every thread that belongs to a monitor from the monitor class 100 must first acquire a gate lock before proceeding. Upon termination of the thread, the gate lock must be released in order to allow the next thread to enter the monitor of the monitor class 100. The basic monitor class 100 offers private methods like "enter()" and "leave()" that implicitly acquire and release the gate lock. Every public method of the monitor class 100 must call "enter()" as a first statement before entering a monitor of the monitor class 100 and "leave()" as a last statement before returning therefrom.

Thus, the short time scheduling of threads entering a monitor of the monitor class 100 is controlled by the gate lock. After entering the monitor of the class 100, long term scheduling of threads waiting within the monitor of the class 100 is controlled by the organization of the internal synchronization blocking points, i.e., which thread is unblocked with a call to one of the "continue ...()" methods referred to below.

For that purpose, an application monitor class 102 with a condition queue (for long-term scheduling) is defined such that this class 102 will allow a thread to stay within a monitor queue class 104 and wait for a condition to become true, while another thread may enter the application monitor of the class 102. At this time, there is still only one thread active in the monitor of the class 100. Additional private methods of this second application monitor of the class 102 are, for example, "delay()", "continue_ stay()" and "continue leave()."

With respect to the monitor queue class 104, this class is designed to already contain important data for long term scheduling.In that regard, the class 104 includes an urgent queue and a pointer to a blocking point for a thread that should be continued. The monitor class 100 does not provide routines to put threads in an appropriate event or condition queue (delay on event /condition nor awaken them (with a continue_ ..() call) by a user defined strategy (i.e., a long term strategy). The monitor queue class 104 basically provides a blocking point for a thread and methods that allow it to delay a thread or to continue a thread by awakening it, and then either keep itself in the monitor or to leave the monitor thereafter.

If a thread wants to wait within the application monitor of the class 102, it calls "delay()" to delay itself on an internal synchronization primitive. Before entering this blocking point, the gate lock will be released to allow another thread to enter the monitor of the class 100.

If a thread wants to leave the monitor of the class 102 and unblock a thread that is waiting within the application monitor of the class 102, it can call "continueleave()". If no thread is delayed in the application monitor of the class 102, then "continue leave()" will release the gate lock. A thread that calls "continue leave()" promises to leave the monitor of the class 100 immediately after completion of its processing because another thread will immediately become active in the monitor.

If a thread wants to unblock another thread in the application monitor of the class 102 and stay within that monitor itself, it calls "continue stay()". The foregoing will result in unblocking a thread waiting within the application monitor of the class 102 and delaying the thread that has called "continue stay()". If no thread is waiting within the monitor of the class 102, the gate lock will be released.

The application monitor class 102 supports long term scheduling in the following way: threads that call delay() are queued in first-in-first-out ( FIFO) strategy order in a strategic access memory 106, the thread that is called for delay() first will be unblocked first with the next continuance.

As can be appreciated, threads have been delayed by a call to "continuestay()" are queued with a higher priority than those that have been delayed by a call to "delay()". That is to say, if a thread is blocked by a call to "delay()" and a second thread is blocked by a call to "continue stay()", then, upon the next call to one of the "continue ...()" methods, the second thread will be unblocked first, even if the first thread has been blocked for a long time.

The advantage of using application monitors as just described is that the users of application monitor routines need not think about the synchronization of these routines. This work will have been done prior by the developer of the two monitor classes. Furthermore, monitors offer a defined long term scheduling while some synchronization primitives (for example, mutex, condition variable) provide an unspecified (and unpredictable) scheduling (that is, if several threads block on the same synchronization primitive, it is unpredictable which thread is unblocked next). Furthermore, all synchronization problems can be solved with these two basic monitor classes 100 and 102. For implementation purposes, only a single synchronization primitive or semaphore is needed.

Attached as an Appendix hereto is code for implementing the foregoing monitor system. The code should be readily understood by those of ordinary skill in this art. The Appendix in incorporated herein by reference.

Although modifications and changes may be suggested by those skilled in the art, it is the intention of the inventors to embody within the patent warranted hereon all changes and modifications as reasonably and properly come within the scope of their contribution to the art.

## Claims

1. An object oriented computing system for executing threads on a computer platform, comprising
a basic monitor class for short term scheduling of thread execution;
a gate lock which controls entry of threads into a monitor of the basic monitor class so as to limit entry into the monitor to one thread at a time;
an application monitor class for long term scheduling of thread execution, which application monitor class inherits from the basic monitor class, an application monitor of the application monitor class having a condition queue for queuing or stacking of threads waiting for conditions to become true while other threads may enter the monitor of the basic monitor class; and
a memory accessed by the application monitor for first-in, first-out (FIFO) storage of threads whose execution has been delayed.

2. The object oriented computing system according to claim 1, wherein the basic monitor class has a private method that implicitly acquires the gate lock and a private method that implicitly releases the gate lock.

3. The object oriented computing system according to claim 1 or 2, wherein the basic monitor class has public methods, and every public method must call routines that acquire and release the gate lock when entering and leaving a monitor of the basic monitor class, respectively.

4. The object oriented computing system according to claim 1 to 3, wherein the application monitor class has private methods for 1) threads to call to delay themselves on an internal synchronizing primative and 2) threads to block and unblock other threads under execution in a monitor of the basic monitor class.

5. The object oriented computing system according to claim 1 to 4, wherein the private methods of the application monitor class include a delay() method which a thread can call to deliberately delay itself in the memory.

6. The object oriented computing system according to claim 1 to 5, wherein the private methods of the application monitor class include a continue_leave method which a thread can call to unblock a thread that is delayed within the application monitor, while the thread calling the continue_leave method leaves monitor immediately after it has finished execution.

7. The object oriented computing system according to claim 1 to 6, wherein the private methods of the application monitor class include a continue_stay method which a thread can call to unblock a thread that is delayed within the application monitor, while the thread calling the continue_stay method then becomes blocked within the application monitor.

8. A storage medium including object oriented code for an object oriented computing system for executing threads on a computer platform, comprising
a basic monitor class for short term scheduling of thread execution;
a gate lock which controls entry of threads into a monitor of the basic monitor class so as to limit entry into the monitor to one thread at a time;
an application monitor class for long term scheduling of thread execution, which application monitor class inherits from the basic monitor class, an application monitor of the application monitor class having a condition queue for queuing or stacking of threads waiting for conditions to become true while other threads may enter the monitor of the basic monitor class; and
a memory accessed by the application monitor for first-in, first-out (FIFO) storage of threads whose execution has been delayed.

9. The storage medium according to claim 8, wherein the basic monitor class has a private method that implicitly acquires the gate lock and a private method that implicitly releases the gate lock.

10. The storage medium according to claim 8 or 9, wherein the basic monitor class has public methods, and every public method must call routines that acquire and release the gate lock when entering and leaving a monitor of the basic monitor class, respectively.

11. The storage medium according to claim 8 to 10, wherein the application monitor class has private methods for 1) threads to call to delay themselves on an internal synchronizing primative and 2) threads to block and unblock other threads under execution in a monitor of the basic monitor class.

12. The storage medium according to claim 8 to 11, wherein the private methods of the application monitor class include a delay() method which a thread can call to deliberately delay itself in the memory.

13. The storage medium according to claim 8 to 12, wherein the private methods of the application monitor class include a continue_leave method which a thread can call to unblock a thread that is delayed within the application monitor, while the thread calling the continue_leave method leaves monitor immediately after it has finished execution.

14. The storage medium according to claim 8 to 13, wherein the private methods of the application monitor class include a continue_stay method which a thread can call to unblock a thread that is delayed within the application monitor, while the thread calling the continue_stay method then becomes blocked within the application monitor.

15. A storage medium including object oriented code for an object oriented computing system for executing threads on a computer platform, comprising
a basic monitor class for short term scheduling of thread execution, the basic monitor class having a private method that implicitly acquires the gate lock and a private method that implicitly releases the gate lock, the basic monitor class having public methods, and every public method must call routines that acquire and release the gate lock when entering and leaving a monitor of the basic monitor class, respectively;
a gate lock which controls entry of threads into a monitor of the basic monitor class so as to limit entry into the monitor to one thread at a time;
an application monitor class for long term scheduling of thread execution, which application monitor class inherits from the basic monitor class, an application monitor of the application monitor class having a condition queue for stacking of threads waiting for conditions to become true while other threads may enter the application monitor, the application monitor class having private methods for threads to call to delay themselves on an internal synchronizing primitive and threads to block and unblock other threads under execution in a monitor of the basic monitor class; and
a memory accessed by the application monitor for first-in, first-out (FIFO) storage of threads whose execution has been delayed,
wherein the private methods of the application monitor class include a delay() method which a thread can call to deliberately delay itself in the memory,
wherein the private methods of the application monitor class include a continue_leave method which a thread can call to unblock a thread that is delayed within the application monitor, while the thread calling the continue_leave method leaves monitor immediately after it has finished execution, and
wherein the private methods of the application monitor class include a continue_stay method which a thread can call to unblock a thread that is delayed within the application monitor, while the thread calling the continue_stay method then becomes blocked within the application monitor.

16. An object oriented computing system for executing threads on a computer platform, comprising
a basic monitor class for short term scheduling of thread execution, the basic monitor class having a private method that implicitly acquires the gate lock and a private method that implicitly releases the gate lock, the basic monitor class having public methods, and every public method must call routines that acquire and release the gate lock when entering and leaving a monitor of the basic monitor class, respectively;
a gate lock which controls entry of threads into a monitor of the basic monitor class so as to limit entry into the monitor to one thread at a time;
an application monitor class for long term scheduling of thread execution, which application monitor class inherits from the basic monitor class, an application monitor of the application monitor class having a condition queue for stacking of threads waiting for conditions to become true while other threads may enter the application monitor, the application monitor class having private methods for threads to call to delay themselves on an internal synchronizing primitive and threads to block and unblock other threads under execution in a monitor of the basic monitor class; and
a memory accessed by the application monitor for first-in, first-out (FIFO) storage of threads whose execution has been delayed,
wherein the private methods of the application monitor class include a delay() method which a thread can call to deliberately delay itself in the memory,
wherein the private methods of the application monitor class include a continue_leave method which a thread can call to unblock a thread that is delayed within the application monitor, while the thread calling the continue_leave method leaves monitor immediately after it has finished execution, and
wherein the private methods of the application monitor class include a continue_stay method which a thread can call to unblock a thread that is delayed within the application monitor, while the thread calling the continue_stay method then becomes blocked within the application monitor.
